# EUROPEAN PATENT APPLICATION

(11) **EP 1 762 322 A2**
(43) Date of publication of application: **14.03.2007**
(21) Application number: 06254151.1
(22) Date of filing: 08.08.2006
(51) Int. Cl.: B23H 7/20

(54) **Machining condition setting method for electrical discharge machines**

(30) Priority: 08.09.2005 JP 2005260932
(71) Applicant: FANUC LTD, Minamitsuru-gun, Yamanashi 401-0597 (JP)
(72) Inventor: Ogata, Toshiyuki, R. 8-205, FANUC Manshonharimomi, Yamanashi, 401-0511 (JP); Suzuki, Koji, R. 14-207, FANUC Manshonharimomi, Yamanashi, 401-0511 (JP)
(74) Representative: Billington, Lawrence Emlyn

(57) **Abstract**

Standard machining conditions are registered in advance for each workpiece material and other factors in correspondence to machining speed and precision. The standard machining conditions are selected for execution of machining. The machining precision is measured to determine whether or not the measured machining precision and machining speed (machining time) fall within an allowable target range. If they are not within the range, the machining conditions are modified and machining is executed again. This procedure is repeated until the machining speed and precision fall within the allowable range, at which point the machining conditions are additionally registered and stored. The added machining conditions can be used in the next machining process.

## Description

### BACKGROUND OF THE INVENTION

### 1. Field of the Invention

The present invention relates to electrical discharge machines, including wire electrical discharge machines and die sinking electrical discharge machines, and also relates to a method of automatically setting machining conditions for electrical discharge machines.

### 2. Description of the Related Art

The machining speed and precision of wire electrical discharge machines and die sinking electrical discharge machines have been improved to enable high-speed, high-precision machining of metal molds. For high-speed and high-precision machining, appropriate machining conditions need to be set. There are, however, many machining condition parameters, and since the optimum setting of those parameters will require extensive experience, only a limited number of experienced operators are qualified to set the machining conditions.

The following describes some known techniques for automatically setting machining condition parameters by entering information about electrodes and the material of workpiece to be machined and others.

In the technology described in Japanese Patent ApplicationLaid-OpenNo. 63-99135, machining condition data, including electrical machining conditions, surface roughness, and overcut data, is stored in advance for the machining steps from rough machining to finish machining for each electrode material, workpiece material, and machining type (with or without electrode wear). When the type of machining to be performed, electrode material, and workpiece material are entered, the corresponding stored machining condition data is selected. Next, the final surface roughness is entered, the finish machining conditions are selected, and the semifinish machining conditions and rough machining conditions stored together with the selected machining condition data are also selected. The target shape, electrode wear ratio, and other data are then entered to create a machining program for a series of machining processes ranging from rough machining to finish machining.

Improvement of surface roughness increases the machining time, but the machining speed (machining time) cannot be predicted just from the specified surface roughness, so machining may take longer than expected. To solve this problem by changing the surface roughness to obtain the desired machining speed (machining time), in the technology described in Japanese Patent Application Laid-Open No. 6-315833, setting data including the machining program number, wire diameter, workpiece material, and workpiece thickness is entered. Next, there is displayed a graph indicating the correlation between the machining speed and machining precision according to machining condition base data obtained through experiment in advance. If a point on the displayed graph is specified, the machining conditions actually giving the specified machining speed and precision are determined from the machining condition base data and the setting data and a machining program is created automatically.

In the invention described in Japanese Patent Application Laid-Open No. 6-315833 mentioned above, respective machining condition parameters are automatically set by entering a type of electrode, material of workpiece to be machined, and the like and also by entering desired machining speed and machining precision, thereby simplifying setting of machining conditions. Even when the workpiece material and the installation environment (such as temperature and humidity) of the electrical discharge machine are the same, however, each workpiece has characteristics that may differ depending on, for example, the manufacturer of the workpiece, so the intended machining speed or precision may not be achieved.

### SUMMARY OF THE INVENTION

The present invention provides a method of setting machining conditions for an electrical discharge machine that mitigates the above problem and enables more correct machining conditions to be set in accordance with the installation environment of the electrical discharge machine and the characteristics of a workpiece.

The present invention relates to machining condition setting method for an electrical discharge machine in which standard machining conditions have been registered beforehand in association with information concerning their machining precision and machining speed, and specific machining conditions are selected so that the machining conditions to be executed are set by an automatic machining condition setting function. This method comprises step of modifying the standard machining conditions on the basis of the result of machining executed under the standard machining conditions, and step of registering the modified machining conditions together with information concerning their machining precision and their machining speed as new additional machining conditions. And the machining conditions to be executed are selected from said registered machining conditions on the basis of the information concerning the machining precision and the machining speed stored together with the machining conditions, and the selected machining conditions are set.

One of a standard machining condition group, an additional machining condition group, and a standard machining condition and additional machining condition group may be selected, and then the machining conditions to be executed may be selected from among the selected machining condition group and the selected machining conditions are set.

By specifying the machining speed or the machining precision and displaying machining conditions corresponding to the specified machining speed or machining precision, the machining conditions to be executed may be selected from the displayed machining conditions so that the selected machining conditions are set.

Displaying numbers of machining passes per workpiece in correspondence with the machining precision and the machining speed, and selecting a number of machining passes, the machining conditions for the machining precision and machining speed corresponding to the selected number of machining passes may be displayed so that machining conditions to be executed maybe selected from the displayed machining conditions.

The standard machining conditions may be obtained and registered for specific machining identifying data identifying a workpiece to be machined and an electrode, and said additional machining conditions may also be registered and stored in association with the specific machining identifying data.

According to the setting method of the present invention, it is possible to select machining conditions that achieve a target machining speed and machining precision even when the environment in which the electrical discharge machine is installed varies or the characteristics of workpieces made of the same material by different manufacturers vary.

### BRIEF DESCRIPTION OF THE DRAWINGS

The foregoing and other purposes and features of the present invention will be made apparent from the following description of embodiments with reference to the attached drawings, in which:
FIG.1 is a schematic diagram of an embodiment of an electrical discharge machine to which the method of setting machining conditions according to the present invention is applied.
FIG. 2 shows an example of a machining condition setting screen for the electrical discharge machine in FIG. 1.
FIG. 3 is a flowchart illustrating how a user sets and registers custom machining condition data using the screen in FIG. 2.
FIG. 4 illustrates the setting and registration of custom machining condition data by the procedure shown in FIG. 3.
FIG. 5 is a flowchart illustrating a procedure for selecting and specifying machining conditions from a custom machining condition group, standard machining condition group, or both custom condition group and standard condition group.

### DETAILED DESCRIPTION OF THE PREFERRED EMBODIMENTS

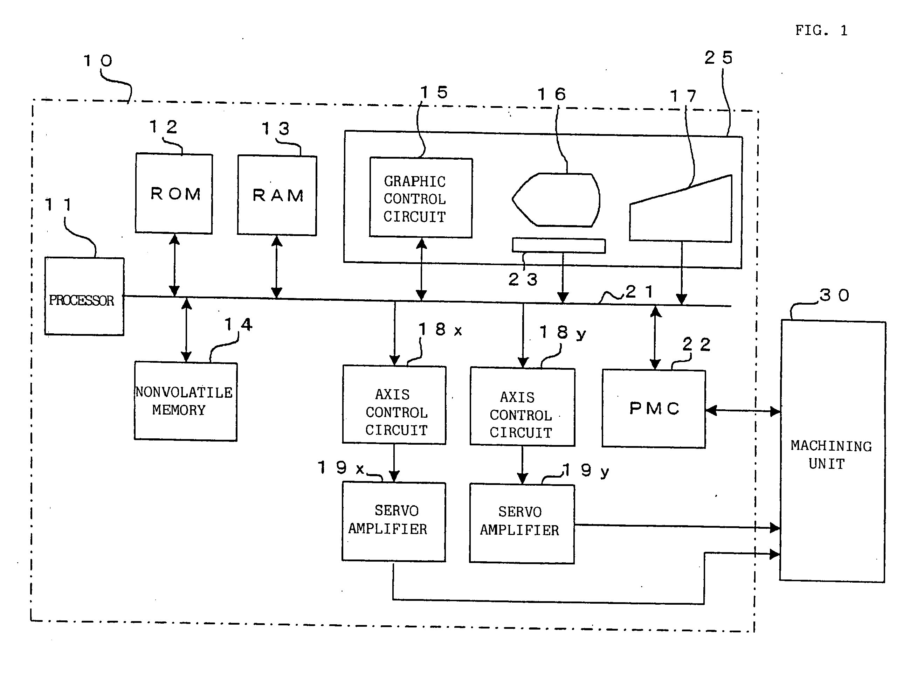

FIG. 1 is a schematic diagram of an electrical discharge machine to which the machining condition setting method of the present invention is applied, mainly illustrating the control unit of the electrical discharge machine. This embodiment shows an example of the setting of machining conditions for a wire electrical discharge machine.

Reference numeral 10 denotes a numerical controller constituting the control unit of the electrical discharge machine, and reference numeral 30 denotes the electrical discharge machine itself (the wire electrical discharge machining unit).

In the numerical controller 10, a ROM 12, a RAM 13, a nonvolatile memory 14, axis control circuits 18x and 18y, a PMC (programmable machine controller) 22, and a man-machine interface 25 are connected to a processor 11 via a bus 21. The processor 11 controls the entire numerical controller 10, following a system program stored in the ROM 12. An EPROM or EEPROM is used as the ROM 12. An SRAM or the like is used as the RAM 13. A CMOS memory backed up by a battery (not shown) is used as the nonvolatile memory 14, which stores parameters that must be retained even after power-off, standard machining condition data for machining conditions set and registered as described later, user-created custom machining condition data set and registered as described later, and machining programs.

A graphic control circuit 15 in the man-machine interface 25 converts digital signals to display signals and provides the converted signals to a display unit 16. A CRT or liquid crystal display is used as the display screen of the display unit 16. The display screen displays machining conditions or a graph of machining speed and machining precision, as described below. As also described below, the actual machining conditions are determined when an operator enters setting data in accordance with information given on the display screen.

In addition, the display screen displays a menu of operations or data that can be accepted on the screen. Soft keys 23 at the bottom of the menu are used to select items from the menu. The labels displayed on the soft keys 23 vary from screen to screen.

A keyboard 17 including symbolic, numeric, and other keys is used to enter setting data or move a cursor. The PMC (programmable machine controller) 22, as described above, receives signals such as a gap voltage signal from the electrical discharge machine 30 and sends them to the processor 11 via the bus 21. The processor 11 receives the gap voltage signal and outputs movement commands to the axis control circuits to drive and control X-axis and Y- axis servo motors at speeds corresponding to the gap voltage.

The axis control circuits 18x and 18y receive axis movement commands from the processor 11 and output axis commands to servo amplifiers 19x and 19y. The servo amplifiers 19x and 19y receive these movement commands and drive the X-axis and Y- axis servo motors of the electrical discharge machine 30. The above components are mutually connected via the bus 21.

In this embodiment, standard machining condition data which has been obtained experimentally is stored in the nonvolatile memory 14 for each machining identifying data for identifying workpieces to be machined and electrodes and also for each machining speeds (or machining precision), of the various data to be set when machining is carried out. Such machining identifying data include data on wire electrode material, wire diameters, and the material and thickness of workpieces to be machined, in case of wire electrical discharge machines, and data on wire electrode material and types of workpieces to be machined.

When executing machining, set data including machining identifying data is entered and a machining speed (or precision) is selected so that machining condition is selected.

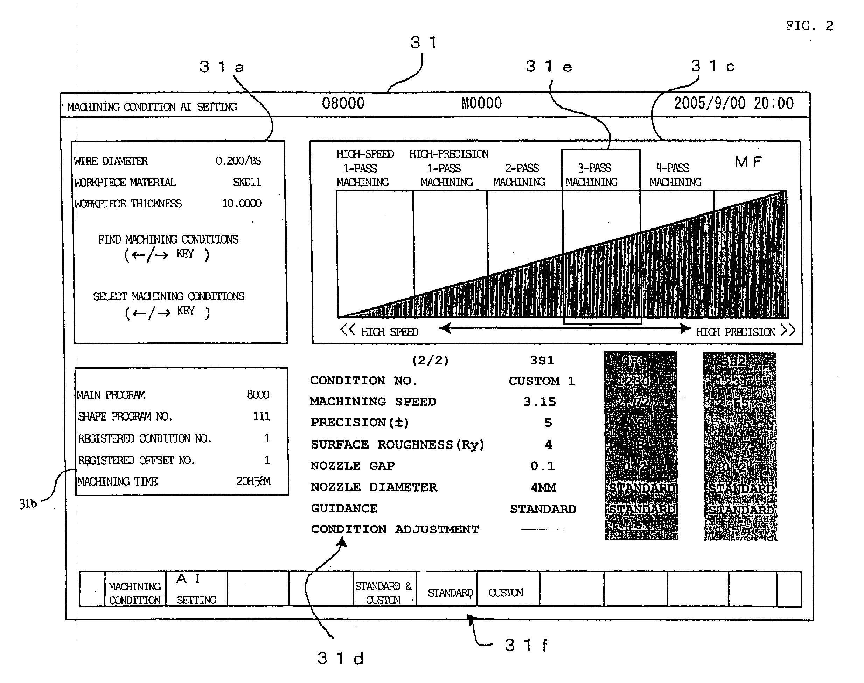

FIG. 2 shows an example of a machining condition display screen that appears on the display screen 31 of the display unit 16. The wire diameter (including wire material), workpiece material, and workpiece thickness, which are included in the machining identifying data, are entered and set in a setting area 31a for machining identifying data.

When the required data is entered in the setting areas 31a, a graph indicating the machining speed (and machining precision) appears in an area 31c for displaying machining speed (machining precision). In this area 31c for machining speed (machining precision), machining speed to be specified increases from right to left and machining precision to be specified increases from left to right. High-speed 1-pass machining, high-precision 1-pass machining, 2-pass machining, 3-pass machining, 4-pass machining, and special machining (MF) are indicated at the top of the graph.

A cursor key on the keyboard 17 is used to move a cursor 31e located in the machining speed (machining precision) area 31c to specify and select a machining speed and machining precision. In the example shown in FIG. 2, the cursor 31e is moved to the 3-pass machining position.

When the machining speed and precision are specified as described above, the registered and saved machining conditions corresponding to the cursor position (3-pass machining) specifying the machining speed and machining precision are displayed in a machining condition display area 31d. In the example shown in FIG. 2, preset standard machining data 3H1 and 3H2 are displayed in descending order of their machining speed, and one additional set of machining conditions which have been set and registered by a user is displayed as custom machining condition data 3S1.

Next, the cursor is moved to the machining condition display area 31d, and one of the sets of machining conditions is selected and specified as the machining execution conditions.

Main program number, shape program number, registration number for specifying the storage destination of machining conditions to be executed, and offset registration number are entered and set in the setting area 31b for other setting data.

When the machining conditions and other setting data have been set in this way, the processor 11 calculates the expected machining time for the specified main program on the basis of the selected and specified machining conditions, and displays the machining time in the setting area 31b.

The above Japanese Patent Application Laid-Open No. 63-99135 does not disclose displaying such custom machining condition data in addition to standard machining condition data, but discloses displaying only standard machining condition data, allowing a user to select only the standard machining condition data. On the other hand, according to the present invention, the custom machining condition data 3S1 set separately by the user of the electrical discharge machine is displayed in addition to standard machining condition data, allowing a user to set the machining condition data 3S1 as the machining execution conditions.

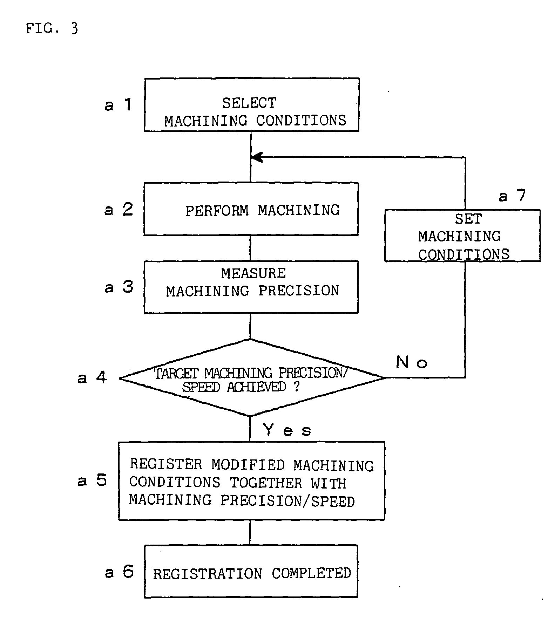

FIG. 3 is a flowchart illustrating how the user sets and registers custom machining condition data.

As described above, setting data including specific machining identifying data (wire diameter, workpiecematerial, and workpiece thickness) is entered, the machining speed (or precision) is selected and specified with the cursor 31e, and one of the displayed sets of machining conditions is selected and specified as the machining execution conditions (step a1).

Machining is actually performed under the specified machining execution conditions (step a2), and the operator measures the machining precision from the machined workpiece (stepa3). In addition, the display screen of the display unit 16 is switched to a machining status display screen, the actual machining time required for machining is read from the machining status display screen, and the user determines whether or not the machining precision falls within the allowable target machining precision range and whether or not the actual machining time falls within the allowable target machining time range (step a4). When the machining precision or the actual machining time falls outside the allowable target range, the operator manually modifies the machining conditions with the keyboard 17 and others. (step a7) and executes the machining process again under the modified machining conditions.

These steps are repeated until the desired machining speed and precision are achieved, at which point the machining conditions are registered, together with their machining precision and machining speed (step a5), thereby completing the registration processing of custom machining condition data (step a6).

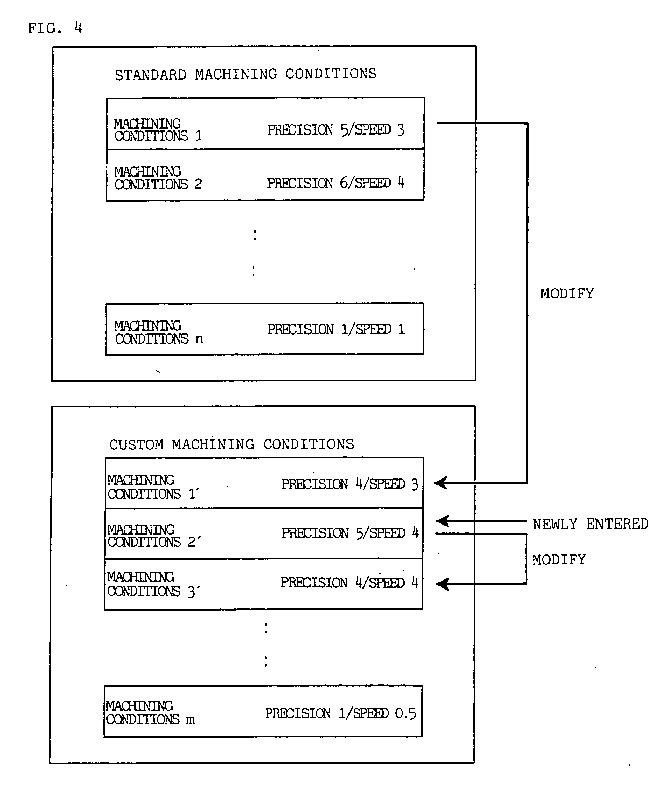

FIG. 4 describes the setting and registration of custom machining condition data.

Machining conditions 1, machining conditions 2,..., machining conditions n are already registered in the nonvolatile memory 14 as standard machining conditions together with information concerning their machining precision and machining speed. The operator creates custom machining condition data by modifying one of the standard machining conditions, following the flowchart in FIG. 3, and registers and saves the created custom machining condition data together with information giving the machining speed and machining precision.

Alternatively, the operator creates a new set of custom machining conditions by modifying a set of custom machining conditions already created, and registers it in the nonvolatile memory 14. The operator can also create new machining conditions without selecting a registered set of machining conditions and then register them as new custom machining conditions. In this case, in step a1 in the flowchart in FIG. 3, only setting data is entered, new machining conditions are entered and set, and then processing at step a2 and the subsequent steps are performed.

Custom machining condition data created in this way are registered and stored for specific machining identifying data.

Next, the setting screen shown in FIG. 2 is displayed on the display screen so that setting data is entered. When the machining speed (or precision) is selected and specified by the cursor 31e, the standard machining conditions and custom machining conditions corresponding to the machining speed (or precision) area specified by the cursor are called up and displayed. The operator can accordingly select user-created custom machining conditions in addition to the standard machining conditions. If electrodes or workpieces made of the same material differ slightly in their characteristics because they are made by different manufacturers, or if the installation environment of the electrical discharge machine varies, once a set of custom machining conditions corresponding to the electrode or workpiece is created, suitable machining conditions can be set easily thereafter by use of the created custom machining conditions, or by slightly modifying the custom conditions when a correction is required.

When the electrical discharge machine has been used for a long time and users have created, registered, and stored many custom machining conditions, the sets of machining conditions included in the machining precision/machining speed area at the position selected by the cursor may become so numerous that user may be confused as to which of machining conditions to select. To cope with this problem, the registered machining conditions may be grouped to make the selection easier.

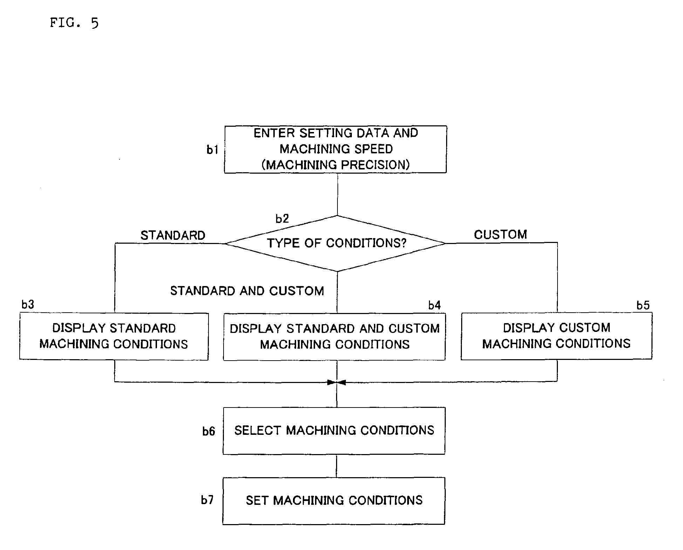

FIG. 5 is a flowchart illustrating steps by which machining conditions can be selected and specified from the standard machining condition group, the custom machining condition group, or the combined standard machining condition and custom machining condition group.

The display screen of the display unit 16 is switched to the machining condition setting screen shown in FIG. 2, setting data is entered as described above, and a machining speed (or precision) is entered (step b1). One of the soft keys 23 shown in the soft key display area 31f as "Standard & Custom," "Standard," and "Custom" is pressed to select a group (step b2).

When "Standard" is selected, only the standard machining conditions registered in the specified machining speed (machining precision) area are displayed (step b3). When "Standard & Custom" is selected, the standard machining conditions and custom machining conditions registered in the specified machining speed (machining precision) area are displayed together (step b4). When "Custom" is selected, only the custom machining conditions registered in the specified machining speed (machining precision) area are displayed (step b5).

One of the sets of machining conditions displayed in this way is selected and specified (step b6), and set as the machining execution conditions (step b7).

The soft keys 23 can be operated to display only standard machining conditions, only custom machining conditions, or both standard machining conditions and custom machining conditions in the machining condition display area 31d. Accordingly, when too many custom machining conditions have been registered for the standard machining conditions and custom machining conditions to be displayed together in the machining condition display area 31d, only the standard machining conditions or only the custom machining conditions can be displayed to select and set the machining conditions conveniently.

## Claims

1. A machining condition setting method for an electrical discharge machine in which standard machining conditions have been registered beforehand in association with information concerning their machining precision and machining speed, and specific machining conditions are selected so that the machining conditions to be executed are set by an automatic machining condition setting function, the method comprising:
modifying the standard machining conditions on the basis of the result of machining executed under the standard machining conditions; and
registering the modified machining conditions together with information concerning their machining precision and their machining speed as new additional machining conditions;
wherein the machining conditions to be executed are selected from said registered machining conditions on the basis of the information concerning the machining precision and the machining speed stored together with the machining conditions, and the selected machining conditions are set.

2. The machining condition setting method according to claim 1, wherein, one of a standard machining condition group, an additional machining condition group, and a standard machining condition and additional machining condition group is selected, and then the machining conditions to be executed are selected from among the selected machining condition group and the selected machining conditions are set.

3. The machining condition setting method according to claim 1, wherein the machining speed or the machining precision is specified, machining conditions corresponding to the specified machining speed or machining precision are displayed, and the machining conditions to be executed are selected from the displayed machining conditions and the selected machining conditions are set.

4. The machining condition setting method according to claim 1, wherein numbers of machining passes per workpiece are displayed in correspondence with the machining precision and the machining speed, a number of machining passes is selected, the machining conditions for the machining precision and machining speed corresponding to the selected number of machining passes are displayed, and machining conditions to be executed are selected from the displayed machining conditions.

5. The machining condition setting method according to claim 1, wherein said standard machining conditions are obtained and registered for specific machining identifying data identifying a workpiece to be machined and an electrode, and said additional machining conditions are also registered and stored in association with the specific machining identifying data.
